Europäisches Patentamt

European Patent Office

Office européen des brevets

(11) Numéro de publication: **0 037 306**
**B1**

(12) **FASCICULE DE BREVET EUROPEEN**

(45) Date de publication du fascicule du brevet:
03.07.85

(21) Numéro de dépôt: **81400403.2**

(22) Date de dépôt: **17.03.81**

(51) Int. Cl.⁴: **C 04 B 35/52**

(54) Procédé et dispositif pour la densification accélérée d'un substrat carboné poreux par décomposition d'une substance hydrocarbonée à haute température et sous haute pression et procédé de préparation de ladite substance.

(30) Priorité: **28.03.80 FR 8007034**
**18.09.80 FR 8020089**

(43) Date de publication de la demande:
**07.10.81 Bulletin 81/40**

(45) Mention de la délivrance du brevet:
**03.07.85 Bulletin 85/27**

(84) Etats contractants désignés:
**BE CH DE FR GB IT LI NL SE**

(56) Documents cités:
**DE - A - 2 745 604**
**FR - A - 2 096 144**
**US - A - 3 957 957**

Le dossier contient des informations techniques présentées postérieurement au dépôt de la demande et ne figurant pas dans le présent fascicule.

(73) Titulaire: **COMMISSARIAT A L'ENERGIE ATOMIQUE Etablissement de Caractère Scientifique Technique et Industriel, B.P. 510, F-75752 Paris Cedex 15 (FR)**
Titulaire: **Office National d'Etudes et de Recherches Aerospatiales (O.N.E.R.A.), 29 Avenue de la Division Leclerc, F-92320 Châtillon-sous-Bagneux (FR)**

(72) Inventeur: **Jamet, Jean, 24, rue du Bois de Montmarre, F-91640 Janvry (FR)**
Inventeur: **Poupeau, Jean-Jacques, 15, Avenue d'Assas, F-78470 Saint-Rémy-lès-Chevreuse (FR)**
Inventeur: **Omnes, Jacqueline, 15, rue Friant, F-75014 Paris (FR)**
Inventeur: **Le Pennec, Claude, 1, Villa du Docteur L.G. Serre, F-94300 Vincennes (FR)**

(74) Mandataire: **Mongrédien, André et al, c/o BREVATOME 25, rue de Ponthieu, F-75008 Paris (FR)**

## Description

La présente invention se rapporte à la fabrication de matériaux carbonés compacts par densification de substrats poreux, celle-ci se faisant par décomposition de produits hydrocarbonés, notamment des brais, à haute température et sous haute pression.

On entend par «densification» une opération consistant à apporter du carbone à un substrat poreux et c'est dans ce sens que le mot sera utilisé dans la suite de cette description.

La plus récente technique d'élaboration de matériaux carbonés compacts, comme les composites carbone-carbone par exemple, met en œuvre de préférence les brais sous haute pression. Ces derniers, essentiellement constitués de carbone et d'hydrogène, présentent un point de ramollissement vers 70–100 °C. Au delà, ils se liquéfient et restent stables jusque vers 350–400 °C: à partir de cette température, ils commencent à se décomposer avec dégagement d'hydrogène et d'hydrocarbures saturés volatils, tandis qu'une mésophase se forme dans la masse liquide.

Celle-ci se présente sous forme de petites sphères, s'apparentant à des cristaux liquides, qui grossissent et finissent, par coalescence, à envahir toute la phase liquide. Une fois la réaction terminée, la substance à densifier subit un traitement de graphitisation vers 2600 °C et on recommence le cycle jusqu'à ce qu'on obtienne la densité désirée.

Afin d'augmenter les rendements en carbone, on a réalisé cette transformation dans des capsules serties et sous haute pression.

Les capsules employées jusqu'à ce jour étant très peu perméables, les gaz produits au cours de la réaction pouvaient provoquer une nucléation au sein de la matière, cette nucléation se déplaçant vers les parois et donnant à terme une certaine porosité au produit obtenu. De plus, le nombre de cycles nécessaires pour obtenir le produit final de densité donnée peut être plus ou moins grand.

C'est pourquoi on a récemment mis en œuvre des procédés utilisant des capsules dont les parois sont réalisées dans un matériau perméable à l'hydrogène: c'est le cas par exemple du procédé décrit dans le brevet français 2 096 144.

En effet, l'élimination de l'hydrogène au fur et à mesure de sa production favorise aussi bien la décomposition de la substance hydrocarbonée que celle des hydrocarbures volatils. On améliore ainsi le rendement des réactions de décomposition en réduisant le volume poreux provoqué par la formation de nucléations gazeuses au sein de la matière: on diminue donc les coûts de fabrication en réduisant le nombre de cycles nécessaires tout en obtenant un produit plus homogène.

D'autre part, les parois des capsules utilisées actuellement présentent une souplesse suffisante pour que l'on puisse travailler sous haute pression. Ceci permet d'améliorer encore le rendement des réactions en permettant de travailler sous très haute pression sans risque de rupture pour le réacteur puisque la pression extérieure est constamment équilibrée par celle de la masse liquide incompressible qu'il contient.

Cependant la qualité des produits obtenus dépend beaucoup du choix de la substance hydrocarbonée à décomposer.

La présente invention a justement pour objet un procédé de densification d'un substrat carboné poreux mettant en œuvre une substance à décomposer parfaitement adaptée au résultat que l'on veut obtenir.

Selon la principale caractéristique de ce procédé, celui-ci du genre de ceux qui consistent à décomposer une substance hydrocarbonée en présence dudit substrat sous haute pression et à haute température, la décomposition se faisant à l'intérieur d'un réacteur fermé permettant l'élimination de l'hydrogène dégagé pendant la réaction au fur et à mesure de sa production, les parois dudit réacteur ayant la souplesse nécessaire pour que le volume intérieur de celui-ci s'adapte à chaque instant, sous l'effet de la pression appliquée au volume de la phase liquide qu'il contient, est caractérisé en ce que la substance hydrocarbonée à décomposer est un Brai de houille contenant 30% de carbone libre.

Selon une autre caractéristique de ce procédé, celui-ci comporte au moins un cycle comprenant les étapes suivantes:

– on place le substrat poreux dans une capsule servant de réacteur,

– la capsule étant placée dans une enceinte où l'on a fait le vide, on fait couler la substance hydrocarbonée à décomposer, préalablement liquéfiée, dans la capsule

– on laisse refroidir, on ramène à la pression atmosphérique et on sort la capsule de l'enceinte,

– on ferme la capsule par un couvercle que l'on soude,

– on fait le vide dans ladite capsule et on place celle-ci dans une enceinte à haute pression où l'on porte la température à 200 °C environ,

– on monte ensuite la pression à l'intérieur de ladite enceinte à haute pression jusqu'à une valeur de l'ordre de 700 à 1000 bars tandis que la température est portée jusque vers 600–700 °C,

– on analyse les gaz issus de l'enceinte à haute pression et on arrête la réaction quand il ne se dégage pratiquement plus d'hydrogène, puis le substrat est soumis à un traitement de graphitisation à une température de l'ordre de 2600 °C.

Une des difficultés de la mise en œuvre du procédé vient de ce que certains brais contiennent en proportion variable du carbone libre (phase $\alpha$), c'est-à-dire des atomes de carbone non liés à d'autres atomes: si leur présence joue un rôle favorable pour l'étape de densification, elle est gênante pour l'étape de graphitisation. En effet, le carbone libre empêche la coalescence des sphères de mésophase et joue un rôle retardateur lors de l'étape de graphitisation.

Le carbone libre était réputé jusqu'à ce jour pour présenter un autre inconvénient: en effet, les substrats fibreux constituent des filtres pour les suspensions solides, même lorsque les particules des suspensions sont très fines, et l'on aboutit dans les conditions normales de température et de pression habituellement mises en œuvre dans ce genre de technique, à des colmatages des parois du substrat dès le début de l'imprégnation.

Or, les inventeurs ont montré que, contrairement à ce qui est communément admis, il était possible d'utiliser des brais ou autres substances hydrocarbonées contenant un taux élevé de carbone libre: si l'on travaille sous une pression suffisamment élevée (700–1000 bars) our peut éviter le colmatage indiqué ci-dessus.

Il se trouve également que dans l'art antérieur, les composites carbone-carbone de qualité exceptionnelle n'étaient pas spécialement recherchés dans la mesure où ces matériaux étaient utilisés notamment pour réaliser des électrodes et que les armatures fibreuses disponibles n'auraient pas supporté les contraintes dues à une pression trop élevée.

Les substances contenant du carbone libre et plus particulièrement les brais de houille permettent d'obtenir des produits ayant d'excellentes qualités mécaniques s'expliquant par une texture de grain extrêmement fine (absence de coalescence de la mésophase) et une parfaite adhésivité sur le substrat s'expliquant par la grande mouillabilité des brais de houille, hautement aromatiques.

Donc, sinon ne recherche pas une graphitisation parfaite, mais surtout de bonnes qualités mécaniques, on utilisera avantageusement des substances contenant du carbone libre.

Si, au contraire, on désire une graphitisation parfaite, la substance devra être exempte de carbone libre. Dans ce cas, la substance hydrocarbonée à décomposer, ou précurseur de graphite pur, peut être un brai ayant un rapport atomique C/H supérieur à 1,4 et de préférence compris entre 1,4 et 1,9 ou un produit pur tel que l'acénaphtylène ou le phénanthrène par exemple.

Cependant ces produits présentent quelques inconvénients.

Les brais sont disponibles facilement et à bon marché, mais ce sont des sous-produits et de ce fait ils renferment de nombreuses impuretés.

Ils contiennent du soufre qui non seulement risque de détériorer les réacteurs métalliques, mais provoque un phénomène dit «effet puffing» à partir d'environ 1300/1400°C: à cette température il part subitement, ce qui provoque des variations dimensionnelles brutales de la matrice et rend plus délicate l'étape de graphitisation.

Les produits purs tels que l'acénaphtylène et le phénanthrène ne contiennent ni impuretés, ni carbone libre, mais ils sont malheureusement très coûteux.

La présente invention a également pour objet un procédé qui supprime ces inconvénients en utilisant comme substance hydrocarbonée à décomposer un produit bon marché et qui ne contient que très peu d'impuretés.

Selon la principale caractéristique de ce procédé, la substance hydrocarbonée à décomposer comprend un mélange d'acénaphtylène et d'un brai ayant un rapport atomique C/H supérieur à 1,4 et contenant moins de 0,1% de composants insolubles dans les quinoléines, environ 20% de composants insolubles dans le toluène, moins de 0,2% de soufre, moins de 0,1% d'oxygène et moins de 0,1% d'azote, la proportion d'acénaphtylène dans le mélange étant de l'ordre de 5 à 40% en poids.

L'invention a également pour objet un procédé de préparation de la substance hydrocarbonée à décomposer utilisée dans le procédé ci-dessus. Selon la principale caractéristique de ce procédé de préparation celui-ci comprend les étapes suivantes:

– on broie l'acénaphtylène et le brai séparément, à sec et à température ordinaire jusqu'à obtention de poudres dont les grains ont des dimensions inférieures à 100 µm,

– toujours à sec et à température ordinaire, on mélange les deux poudres, la proportion d'acénaphtylène étant comprise entre 5 et 40% en poids et,

– on dégaze le mélange dans un réacteur soumis à une agitation permanente, à une température de l'ordre de 140°C, jusqu'à ce que la pression résiduelle dans le réacteur soit de l'ordre de 5 mm de mercure.

D'autres caractéristiques et avantages de l'invention apparaîtront à l'aide de la description qui va suivre donnée à titre purement illustratif et nullement limitatif.

La substance à décomposer doit non seulement avoir une composition semblable à celle du brai indiquée ci-dessus, mais en plus présenter les caractéristiques suivantes:
– rendement coke (Conradson) de l'ordre de 50%
– viscosité à 200°C inférieure à 400 cps
– taux de cendre inférieur à 0,15%.

Certains brais de pétrole ont une composition et des caractéristiques très proches de celles recherchées, notamment en ce qui concerne le faible taux de soufre.

Lorsqu'un tel brai est utilisé seul, on observe un faible développement de la mésophase et un retrait à haute température relativement élevé. Cependant, si on le mélange à de l'acénaphtylène on obtient un produit aux propriétés particulièrement intéressantes.

Tout d'abord on a mis en évidence l'existence d'une composition eutectique correspondant à 70% de brai et 30% d'acénaphtylène. Il n'y a pas de démixtion lors des phases de fusion ou de solidification. D'autre part ce mélange présente un point de ramollissement proche de la température ambiante, ce qui simplifie les étapes préliminaires du procédé.

A titre d'exemple, on a réalisé la densification d'un substrat de carbone fibreux multidirectionnel avec trois précurseurs différents. L'essai mécanique caractérisant le mieux les liaisons réalisées par le carbone matriciel entre les torons de fibres consiste à mesurer la contrainte à rupture en cisaillement des torons lors d'une extraction de ceux-ci en traction à froid. Les résultats obtenus avec les trois précurseurs différents ont été les suivants:

– brai de pétrole à 1,7% de soufre: 0,40 daN/mm²
– brai de pétrole à 0,1% de soufre,
tel que celui utilisé dans le procédé
objet de l'invention, employé seul: 0,75 daN/mm²
– mélange utilisé dans le procédé objet de l'invention: 0,93/daN/mm².

Ceci montre bien qu'on obtient la meilleure adhésion entre les torons et la matrice en graphite avec le produit utilisé dans le procédé selon l'invention.

De plus, l'essai qui a été réalisé a mis en évidence d'autres propriétés particulièrement intéressantes:

– très large développement de la mésophase, identique à celui obtenu avec l'acénaphtylène pur,

– un rendement coke identique à celui des brais classiques en carbonisation haute pression,

– un retrait remarquablement faible au-delà de 1000 °C, ce qui entraîne une réduction de la durée du traitement thermique,

– une graphitisation complète à une température relativement faible, inférieure ou égale à 2600 °C.

On voit donc que le produit précurseur de graphite utilisé dans le procédé selon l'invention apporte de nombreux avantages dont les principaux sont:

– prix de revient modéré du fait de l'emploi de brai bon marché dans une proportion importante (environ 70% ou davantage),

– mise en œuvre simplifiée du fait de la très faible température de ramollissement de l'eutectique, (correspondant à environ 30% d'acénaphtylène),

– absence d'effet puffing car on mélange un produit pur à un brai contenant très peu de soufre,

– enfin un bon rendement en coke et un comportement lors des opérations de graphitisation qui permet de réduire la durée et la température de celles-ci, d'où une appréciable économie d'énergie.

La présente invention a également pour objet un dispositif pour la mise en œuvre du procédé. Selon le mode de réalisation préféré, ce dispositif se caractérise en ce qu'il comporte une capsule anéroïde dont les parois, réalisées dans un matériau perméable à l'hydrogène, sont minces et ondulées.

En effet, pour obtenir une bonne perméabilité du réacteur vis-à-vis de l'hydrogène, il faut non seulement choisir un matériau perméable à ce gaz, mais de plus on a tout intérêt à augmenter autant que possible le rapport surface/épaisseur des parois de celui-ci, d'où la forme choisie. De plus, cette forme rend la capsule assez souple pour qu'elle puisse se déformer au cours du traitement sous l'effet de la pression appliquée sans risque de se fissurer. Enfin, de telles structures ont l'avantage d'être disponibles dans le commerce dans une très large gamme de dimensions et de matériaux, ce qui diminue le coût de fabrication de telles capsules.

D'autres caractéristiques et avantages de l'invention apparaîtront plus clairement et la mise en œuvre du procédé sera mieux comprise à la lecture de la description qui va suivre, donnée à titre d'exemple purement illustratif et non limitatif, en référence aux dessins annexés dans lesquels:

– la figure 1 représente une vue en coupe de la capsule anéroïde utilisée;

– la figure 2 représente une vue en coupe du dispositif de mise sous vide de la capsule de la figure 1;

– la figure 3 représente, en échelle logarithmique, les courbes donnant le débit massique d'hydrogène (en grammes/seconde) en fonction du temps (en heures) pour deux types de capsules;

– la figure 4 présente les courbes donnant l'augmentation de densité du substrat après chaque cycle pour trois types différents de capsule.

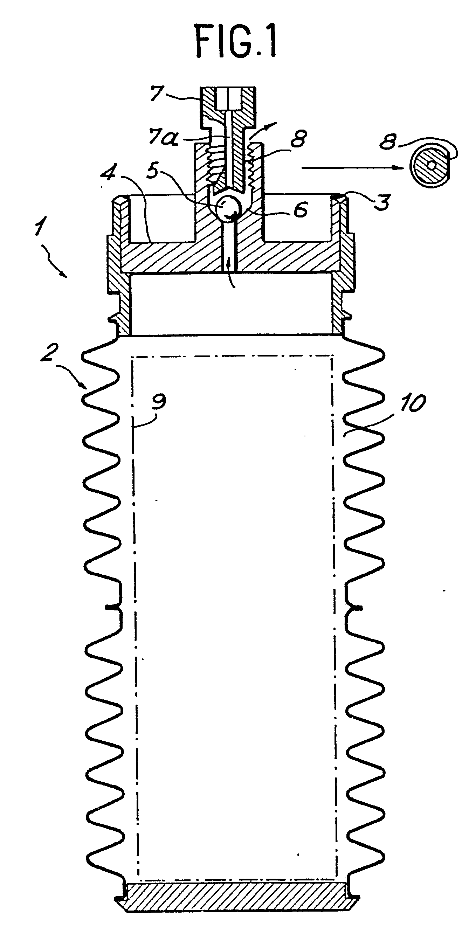

La figure 1 représente une capsule anéroïde 1 aux parois minces et ondulées 2. Cette forme permet d'augmenter considérablement le rapport surface/épaisseur des parois de la capsule, rendant celle-ci plus perméable à l'hydrogène à condition bien entendu, que le matériau constitutif de la capsule permette la diffusion de ce gaz. De manière connue, on obtient une bonne perméabilité en choisissant comme matériau constitutif de la capsule un métal tel que le nickel ou l'acier inoxydable. Si l'aspect économique n'est pas important, on peut utiliser d'autres matériaux comme le palladium ou un alliage tel que le palladium-argent par exemple.

Sur la figure 1, on voit en outre le dispositif de fermeture 3 constitué par un couvercle 4 soudé à la capsule 1, l'étanchéité étant assurée au moyen de la bille 5 que l'on applique sur le cône 6 au moyen de la vis 7, celle-ci présentant un méplat 8 permettant de faire le vide. Cette dernière opération est également facilitée par le trou central 7a qui traverse la vis 7.

La mise en œuvre du procédé se fait de la façon suivante: de manière classique on place d'abord le produit à densifier 9, par exemple une armature en fibres de carbone, dans la capsule 1 non obturée. On dispose ensuite celle-ci dans une enceinte où l'on fait le vide, puis on remplit la capsule avec le brai 10, préalablement liquéfié, la pression résiduelle dans l'enceinte étant de l'ordre de 5 à 10 mm Hg. En effet, pour que le brai pénètre bien le substrat, il est nécessaire d'effectuer cette opération sous vide et de laisser le brai liquide en contact avec le substrat pendant un temps suffisant. On laisse ensuite refroidir et on ramène à la pression atmosphérique.

Le procédé, utilisé essentiellement pour densifier des composites carbone-carbone, peut naturellement s'appliquer à d'autres substances et le substrat carboné de départ peut être soit une armature en fibres de carbone, soit un produit carboné quelconque dont on désirerait augmenter la densité.

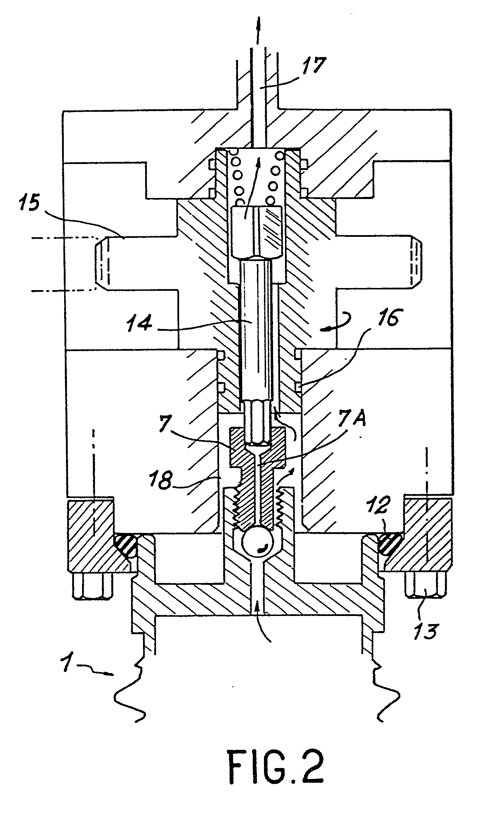

On soude ensuite le couvercle 4 sur la capsule 1 et on fait le vide au moyen du système représenté sur la figure 2. Un capuchon 11 est placé à la partie supérieure de la capsule 1, l'étanchéité étant assurée grâce au joint 12 maintenu par les vis 13. D'autre part, la vis 7 est serrée à l'aide d'une clé télescopique 14, celle-ci étant manœu-

vrée par le système de commande 15: l'étanchéité entre ce dernier et le capuchon 11 est assurée au moyen des joints 16. Un conduit 17 relié à une pompe à vide, non représentée, traverse le système 15.

Lorsque le vide est réalisé dans la capsule 1 et dans l'espace intérieur 18 du capuchon 11, le système de commande 15 est mis en action et on serre la vis 7 pour bloquer la bille 5 sur le cône 6. Il reste un léger espace vide à la partie supérieure de la capsule, la pression résiduelle étant également de l'ordre de 5 à 10 mm Hg.

Ce dispositif de mise sous vide est ensuite retiré et on place la capsule dans une enceinte à haute pression que l'on chauffe à 200 °C; un palier doit être respecté à cette température afin de s'assurer que le brai est bien fondu.

Comme cela se pratique dans les procédés de l'art antérieur, la température est ensuite montée progressivement jusque vers 600–700 °C tandis que la capsule est soumise à une forte pression d'argon (de l'ordre de 700 à 1000 bars). Sous l'effet de cette pression, la capsule s'écrase, ce qui supprime l'espace vide créé précédemment. L'intérieur de la capsule est alors entièrement rempli par la phase liquide. La grande souplesse de la capsule anéroïde selon l'invention permet de travailler à des pressions très élevées (jusqu'à 2000 bars, par exemple, si l'installation le permet) sans risque de rupture pour la capsule puisque la pression extérieure sera toujours équilibrée par celle du liquide qu'elle contient. Un balayage d'argon est nécessaire pour extraire l'hydrogène de l'enceinte, afin que la pression partielle de celui-ci à l'extérieur de la capsule soit toujours le plus faible possible. L'analyse continue des gaz sortant de l'enceinte à haute pression permet de connaître à tout instant le débit d'hydrogène.

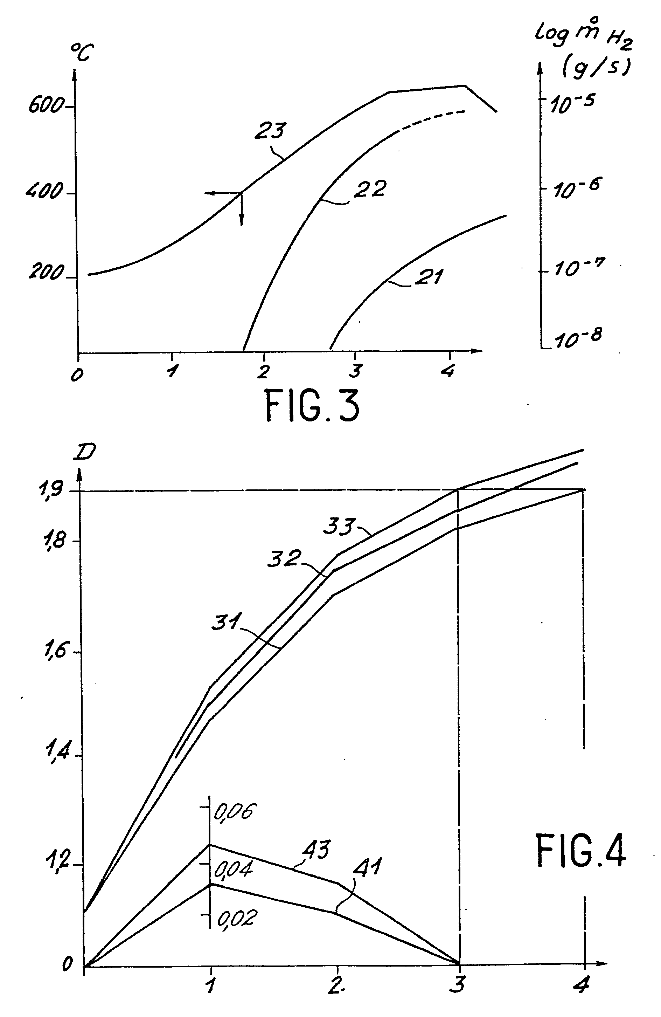

Celui-ci est représenté, en échelle logarithmique et en grammes/seconde, en fonction du temps en heures et de la montée en température sur la figure 3 pour deux types de capsule de même volume permettant une comparaison entre:
– une capsule droite, à parois lisses, en acier inoxydable (courbe 21) du type de celles utilisées dans l'art antérieur, et
– une capsule anéroïde à parois minces et ondulées en nickel (courbe 22) conforme à la présente invention. Sur cette figure, on a également représenté l'évolution de la température en fonction du temps (courbe 23).

L'expérience décrite ici a été réalisée sous une pression de 700 bars. Quant au brai utilisé, il s'agit d'un brai de houille présentant un point de ramollissement (KS ou Ring-Ball) à 90 °C, et contenant 30% de carbone libre (phase α); en effet, ce dernier favorise la réaction de densification. D'autre part, ce brai a un rendement en carbone de 40% et un rapport atomique carbone/hydrogène égal à 1,89.

A la lecture de la figure 3, on voit que la capsule anéroïde nickel augmente notablement le rendement de la réaction par rapport à la capsule inox droite classique: avec la première, la diffusion d'hydrogène commence beaucoup plus tôt, dès que la température atteint une valeur voisine de 400 °C à laquelle le brai commence à se décomposer, tandis qu'avec la seconde il ne se passe rien en-dessous de 500 °C. De plus, à un instant donné, le débit d'hydrogène est environ 100 fois plus fort avec la capsule anéroïde nickel qu'avec la capsule inox droite.

Au bout d'environ 5 heures, le débit d'hydrogène diminue fortement ou cesse, et on arrête l'expérience; le substrat est alors extrait de la capsule et on le soumet à un traitement thermique à 2600 °C pour faire cristalliser le carbone dans le système du graphite.

On recommence ensuite les opérations en répétant le cycle autant de fois que cela est nécessaire pour obtenir la densité finale désirée.

La figure 4 indique la densité du produit obtenu après chaque cycle de densification pour un même substrat de densité initiale 1,12 avec trois types de capsule:
– capsule inox droite (courbe 31) selon l'art antérieur;
– capsule anéroïde inox (courbe 32);
– capsule anéroïde nickel (courbe 33).

On voit que, pour un même produit de départ, la capsule anéroïde nickel permet d'obtenir une densité finale de 1,90 au bout de trois cycles alors qu'il en faut quatre avec la capsule inox droite.

D'autre part, la comparaison des courbes 31 et 32 montre, pour un même matériau constitutif de la capsule, l'amélioration apportée par la structure à parois minces et ondulées, par rapport à la structure à parois lisses.

La comparaison des courbes 32 et 33 montre que, pour une même structure de la capsule, le nickel est plus efficace que l'acier inoxydable.

Les courbes 41 et 43 donnent le gain de densité pour chaque cycle avec la capsule inox droite et la capsule anéroïde nickel respectivement.

Ces courbes montrent qu'après le premier cycle, l'augmentation de densité est bien plus importante avec la capsule anéroïde nickel (courbe 43) qu'avec la capsule inox droite (courbe 41). Au cours des cycles suivants, le gain en densité diminue et finit par s'annuler lorsque le substrat atteint sa densité maximale.

On voit donc que l'invention permet bien d'atteindre le but visé qui est l'obtention rapide et économique de matériaux carbonés compacts.

Il va de soi que la présente invention ne se limite pas à l'exemple décrit ci-dessus, et que d'autres modes de réalisation et de mise en œuvre sont possibles.

L'élimination de l'hydrogène peut également se faire par piégeage à l'aide d'une éponge de titane ou avec du noir de palladium, deux matériaux dans lesquels l'hydrogène a une grande solubilité.

D'autres formes de réacteur sont également possibles et on peut envisager des capsules aplaties et circulaires, ayant toujours des parois ondulées, du genre de celles utilisées dans les baromètres anéroïdes.

Les applications sont nombreuses et variées, notamment pour la fabrication de matériaux carbonés compacts de n'importe quelle forme et dimension: ceux-ci et plus spécialement les composites carbone-carbone sont pratiquement les seuls utilisables dans les domaines où une grande résistance mécanique et une grande résistance à l'abrasion à haute température sont nécessaires. On peut encore citer comme exemple la fabrication d'électrodes, de freins pour automobiles ou avions, éventuellement de prothèses médicales puisque le carbone est compatible avec les tissus vivants.

**Revendications**

1. Procédé pour la densification accélérée d'un substrat carboné poreux (9), du genre de ceux qui consistent à décomposer une substance hydrocarbonée (10) en présence dudit substrat sous haute pression et à haute température, la décomposition se faisant à l'intérieur d'un réacteur fermé permettant l'élimination de l'hydrogène dégagé pendant la réaction au fur et à mesure de sa production, les parois dudit réacteur ayant la souplesse nécessaire pour que le volume intérieur de celui-ci s'adapte à chaque instant, sous l'effet de la pression appliquée, au volume de la phase liquide qu'il contient, caractérisé en ce que, pour obtenir de bonnes qualités mécaniques, on utilise comme substance hydrocarbonée à décomposer un brai de houille contenant 30% de carbone libre.

2. Procédé pour la densification accélérée d'un substrat carboné poreux (9), du genre de ceux qui consistent à décomposer une substance hydrocarbonée (10) en présence dudit substrat sous haute pression et à haute température, la décomposition se faisant à l'intérieur d'un réacteur fermé permettant l'élimination de l'hydrogène dégagé pendant la réaction au fur et à mesure de sa production, les parois dudit réacteur ayant la souplesse nécessaire pour que le volume intérieur de celui-ci s'adapte à chaque instant, sous l'effet de la pression appliquée, au volume de la phase liquide qu'il contient, caractérisé en ce que, pour obtenir une bonne graphitisation, on utilise comme substance hydrocarbonée à décomposer un mélange d'acénaphtylène et d'un brai ayant un rapport atomique C/H supérieur à 1,4 et contenant moins de 0,1% de composants insolubles dans les quinoléïnes, environ 20% de composants insolubles dans le toluène, moins de 0,2% de soufre, moins de 0,1% d'oxygène et moins de 0,1% d'azote, la proportion d'acénaphtylène dans le mélange étant de l'ordre de 5 à 40% en poids.

3. Procédé selon la revendication 2, caractérisé en ce que la proportion d'acénaphtylène dans le mélange est de 30% environ, ce qui correspond à une composition eutectique.

4. Procédé selon l'une quelconque des revendications 1 à 3, caractérisé en ce qu'il comporte au moins un cycle comprenant les étapes suivantes:
– on place le substrat poreux dans une capsule (1) servant de réacteur,
– la capsule étant placée dans une enceinte où l'on a fait le vide, on fait couler la substance hydrocarbonée (10) à décomposer, préalablement liquéfiée, dans la capsule (1),
– on laisse refroidir, on ramène à la pression atmosphérique et on sort la capsule (1) de l'enceinte,
– on ferme la capsule (1) par un couvercle (4) que l'on soude,
– on fait le vide dans ladite capsule (1) et on place celle-ci dans une enceinte à haute pression où l'on porte la température à 200 °C environ,
– on monte ensuite la pression à l'intérieur de ladite enceinte à haute pression jusqu'à une valeur de l'ordre de 700 à 1000 bars tandis que la température est portée jusque vers 600–700 °C,
– on analyse les gaz issus de l'enceinte à haute pression et on arête la réaction quand il ne se dégage pratiquement plus d'hydrogène, puis le substrat est soumis à un traitement de graphitisation à une température de l'ordre de 2600 °C.

5. Procédé selon l'une quelconque des revendications 1 à 4, caractérisé en ce que l'élimination de l'hydrogène se fait par piégeage de celui-ci.

6. Procédé selon la revendication 5, caractérisé en ce que l'on utilise comme piège à hydrogène une éponge de titane ou du noir de palladium.

**Claims**

1. Process for the accelerated densification of a porous carbonaceous substrate (9) of the type comprising decomposing a hydrocarbonaceous substance (10) in the presence of said substrate at elevated pressure and temperature, the decomposition being carried out in the interior of a closed reactor enabling the removal of hydrogen eliminated in the reaction, during the course of its production, the walls of said reactor having the flexibility necessary for the internal volume thereof to adapt instantaneously to the volume of liquid contained therein, under the effect of applied pressure, characterized in that the hydrocarbonaceous substance to be decomposed comprises a coal pitch containing 30% of free carbon, whereby to provide good mechanical qualities.

2. Process for the accelerated densification of a porous carbonaceous substrate (9) of the type comprising decomposing a hydrocarbonaceous substance (10) in the presence of said substrate at elevated pressure and temperature, the decomposition being carried out in the interior of a closed reactor enabling the removal of hydrogen eliminated in the reaction, during the course of its production, the walls of said reactor having the flexibility necessary for the internal volume thereof to adapt instantaneously to the volume of liquid contained therein, under the effect of applied pressure, characterized in that, whereby to obtain good graphitisation, the hydrocarbonaceous substance to be decomposed is a mixture of acenaphthylene and a pitch having an atomic ratio C/H greater than 1.4, and containing less than 0.1% of quinoline-insoluble components, around 20% of toluene-insoluble components, less than 0.2% of sulphur, less than 0.1% of oxygen and less than 0.1% of nitrogen, the proportion of acenaphthylene in the mixture being in the range of 5 to 40% by weight.

3. Process according to Claim 2, characterized in that the proportion of acenaphthylene in the mixture is around 30%, which corresponds to a eutectic composition.

4. Process according to any one of Claims 1 to 3, characterized in that it comprises at least one cycle having the following steps:
— the porous substrate is positioned in a capsule (1) serving as reactor,
— the capsule is transferred into an enclosed vessel which is placed under vacuum, and a preliminarily-liquified hydrocarbonaceous substance (10) to be decomposed, is allowed to flow into the capsule (1),
— the capsule (1) is allowed to cool, brought to atmospheric pressure and removed from the enclosed vessel,
— the capsule (1) is closed by welding on a lid (4),
— the capsule (1) is evacuated and placed within a high pressure vessel and brought to a temperature of around 200 °C,
— the pressure within the high pressure vessel is increased to a value in the range from 700 to 1000 bars while the temperature is raised to around 600 to 700 °C, and
— the gas issuing from the high pressure vessel is analysed and reaction is stopped when substantially no further hydrogen is eliminated, the substrate then being subjected to a graphitization treatment at a temperature of around 2600 °C.

5. Process according to any one of Claims 1 to 4, characterized in that elimination of the hydrogen is carried out by adsorption thereof.

6. Process according to Claim 5, characterized in that a sponge of titanium or palladium black is employed to adsorb the hydrogen.

**Patentansprüche**

1. Verfahren zur beschleunigten Verdichtung eines porösen Kohlenstoffsubstrats (9) durch Zersetzung einer kohlenwasserstoffhaltigen Substanz (10) in Gegenwart des Substrats unter hohem Druck und bei hoher Temperatur, wobei die Zersetzung im Innern eines geschlossenen Reaktors abläuft, der die Eliminierung des während der Reaktion im Ofen freigesetzten Wasserstoffs im Masse seiner Bildung erlaubt, wobei die Wände des Reaktors die erforderliche Weichheit besitzen, so dass sich das Innen-Volumen desselben in jedem Augenblick unter dem Einfluss des angewendeten Druckes an das Volumen der flüssigen Phase, die er enthält, anpasst, dadurch gekennzeichnet, dass man zur Erzielung guter mechanischer Eigenschaften als zu zersetzende kohlenwasserstoffhaltige Substanz einen Steinkohlenteer verwendet, der 30% freien Kohlenstoff enthält.

2. Verfahren zur beschleunigten Verdichtung eines porösen Kohlenstoffsubstrats (9) durch Zersetzung einer kohlenwasserstoffhaltigen Substanz (10) in Gegenwart des Substrats unter hohem Druck und bei hoher Temperatur, wobei die Zersetzung im Innern eines geschlossenen Reaktors abläuft, der die Eliminierung des bei der Reaktion im Ofen freigesetzten Wasserstoffs im Masse seiner Bildung erlaubt, wobei die Wände des Reaktors die erforderliche Weichheit besitzen, so dass sich das Innenvolumen desselben in jedem Augenblick unter dem Einfluss des angewendeten Druckes an das Volumen der flüssigen Phase, die er enthält, anpasst, dadurch gekennzeichnet, dass man zur Erzielung einer guten Graphitierung als zu zersetzende kohlenwasserstoffhaltige Substanz verwendet eine Mischung aus Acenaphthylen und einem Teer mit einem C/H-Verhältnis von über 1,4, der enthält weniger als 0,1% in den Chinoleinen unlösliche Bestandteile, etwa 20% in Toluol unlösliche Bestandteile, weniger als 0,2% Schwefel, weniger als 0,1% Sauerstoff und weniger als 0,1% Stickstoff, wobei der Mengenanteil des Acenaphthylens in der Mischung in der Grössenordnung von 5 bis 40 Gew.-% liegt.

3. Verfahren nach Anspruch 2, dadurch gekennzeichnet, dass der Mengenanteil des Acenaphthylens in der Mischung etwa 30% beträgt, was einer eutektischen Zusammensetzung entspricht.

4. Verfahren nach einem der Ansprüche 1 bis 3, dadurch gekennzeichnet, dass es mindestens einen Zyklus umfasst, der die folgenden Stufen umfasst:
— man bringt das poröse Substrat in eine als Reaktor dienende Kapsel (1) ein,
— man führt die Kapsel in einen Behälter (eine Kammer) ein, der (die) unter Vakuum gesetzt wird, lässt die vorher verflüssigte, zu zersetzende kohlenwasserstoffhaltige Substanz (10) in die Kapsel (1) fliessen,
— lässt abkühlen, bringt wieder auf Atmosphärendruck und nimmt die Kapsel (1) aus dem Behälter (der Kammer) heraus,
— man schliesst die Kapsel (1) mit einem Deckel (4), den man damit verschweisst,
— man setzt die Kapsel (1) unter Vakuum und führt sie in einen Hochdruckbehälter (eine Hochdruckkammer) ein, in der man die Temperatur auf etwa 200 °C bringt,
— man erhöht anschliessend den Druck im Innern des Behälters (der Kammer) auf einen hohen Druck bis zu einem Wert in der Grössenordnung von 700 bis 1000 bar, während man die Temperatur bis auf etwa 600 bis 700 °C bringt,
— man analysiert die aus dem Hochdruckbehälter (der Hochdruckkammer) austretenden Gase und stoppt die Reaktion, wenn praktisch kein Wasserstoff mehr freigesetzt wird, dann unterwirft man das Substrat einer Graphitierungsbehandlung bei einer Temperatur in der Grössenordnung von 2600 °C.

5. Verfahren nach einem der Ansprüche 1 bis 4, dadurch gekennzeichnet, dass die Eliminierung des Wasserstoffs durch Einleiten desselben in eine Falle erfolgt.

6. Verfahren nach Anspruch 5, dadurch gekennzeichnet, dass man als Wasserstoffalle einen Titanschwamm oder Palladiummohr verwendet.

FIG.1

FIG.2

FIG.3

FIG.4